Europäisches Patentamt

European Patent Office

Office européen des brevets

(11) Numéro de publication : **0 456 559 B1**

# FASCICULE DE BREVET EUROPEEN

(45) Date de publication du fascicule du brevet :
**09.08.95 Bulletin 95/32**

(51) Int. Cl.$^6$ : **G01N 15/08,** G01N 30/00

(21) Numéro de dépôt : **91401164.8**

(22) Date de dépôt : **02.05.91**

(54) Procédé et dispositif pour mesurer l'adsorption et la désorption d'un gaz adsorbé par un échantillon solide ainsi que son utilisation.

(30) Priorité : **09.05.90 FR 9005871**

(43) Date de publication de la demande :
**13.11.91 Bulletin 91/46**

(45) Mention de la délivrance du brevet :
**09.08.95 Bulletin 95/32**

(84) Etats contractants désignés :
**BE DE ES FR GB IT NL**

(56) Documents cités :
**US-A- 4 489 593**
**US-A- 4 762 010**
**INTERNATIONAL LABORATORY, vol. 15, no.
1, janvier/février 1985, pages
37,38,40-42,44,46; J.E. SHIELDS et al.: "A high
throughput automated instrument for adsor-
ption-desorption isotherms"**

(73) Titulaire : **INSTITUT FRANCAIS DU PETROLE
4, Avenue de Bois Préau
F-92502 Rueil-Malmaison (FR)**

(72) Inventeur : **Ajot, Hubert
6, Rue Henri Dunant
F-92500 Rueil Malmaison (FR)**
Inventeur : **Joly, Jean-François
20, rue Béranger
F-75003 Paris (FR)**
Inventeur : **Garnier, Dominique Albert
2 Allée Scheurer Kestner
F-92150 Suresnes (FR)**
Inventeur : **Marny, Félix
6, Rue Henri Dunant
F-92500 Rueil Malmaison (FR)**
Inventeur : **Raatz, Francis
25 Rue de la Carrière
F-57500 Saint Avold (FR)**
Inventeur : **Russmann, Colette
9 Résidence Edmond Rostand
F-95600 Eaubonne (FR)**

EP 0 456 559 B1

Jouve, 18, rue Saint-Denis, 75001 PARIS

## Description

La présente invention concerne un procédé et un appareil de mesure en continu des isothermes d'adsorption-désorption de gaz de solides poreux ou non. Elle concerne aussi l'utilisation de cet appareil notamment dans un procédé de mesure d'aire spécifique d'un matériau adsorbant.

Deux grands types d'informations peuvent être extraites des isothermes d'adsorption-désorption de gaz de solides. Si l'on se place dans le régime de la physisorption, c'est-à-dire à basse température en utilisant des molécules ne donnant pas lieu à des interactions spécifiques avec des sites de surface particuliers (exemple azote, argon, krypton, à la température de 77K), les isothermes d'adsorption-désorption permettent de caractériser les propriétés texturales des solides. En traitant une partie ou l'ensemble de ces isothermes par des théories bien connues : BET, t, BJH etc. (on pourra se référer à "Adsorption, Surface Area and Porosity" S.J. GREGG et K.S.W. SING, Academic Press Inc., seconde edition, 1982) on a accès à des grandeurs telles que par exemple la surface spécifique, le volume microporeux, la répartition poreuse. Si on se place par contre dans le régime de la chimisorption, c'est-à-dire à haute température en utilisant des molécules donnant lieu à une interaction spécifique avec certains sites de surface particuliers (exemple l'ammoniac, le monoxyde de carbone, l'hydrogène, à des températures supérieures à 273 K) on peut caractériser l'acidité ou le caractère métallique des solides, c'est-à-dire des fonctions de surface.

La caractérisation des solides sous les deux aspects : propriétés texturales ou fonctions de surface intéresse plusieurs domaines industriels importants comme par exemple, la catalyse, l'adsorption et la cimenterie.

La détermination des isothermes d'adsorption-désorption de gaz peut être réalisée en discontinu ou en continu, la première technique est de loin la plus utilisée. La technique discontinue consiste, pour l'adsorption, à injecter des doses connues de gaz dans un enceinte contenant le solide préalablement prétraité. Pour la désorption on réalise l'opération inverse, on soutire des quantités connues de gaz de l'enceinte contenant l'échantillon. Les deux branches de l'isotherme (adsorption-désorption) sont ainsi décrites point par point. Plusieurs appareillages commerciaux réalisant ce type d'expérience existent sur le marché, on peut citer par exemple les appareils développés par les sociétés Micromeritics, Erba Science.

Les appareils basés sur l'injection et le soutirage discontinu de quantités connues de gaz comportent un certain nombre d'inconvénients. Ce type de procédure est assez mal adapté à la description précise des isothermes de type I dans la zone des faibles pressions partielles, car les volumes à injecter deviennent alors extrèmement faibles. Par ailleurs, la description discontinue de l'isotherme ne permet pas de mettre en évidence des irrégularités de faibles amplitudes présentées par certains solides et qui pourraient être révélatrices de réarrangements de la phase adsorbée (voir par exemple J. ROUQUEROL, F. ROUQUEROL, Y. GRILLET et R.J. WARD dans 'Characterization of porous solids", Studies in Surface Science and Catalysis, Vol. 39 (1988), p. 67.

La technique d'adsorption ou de désorption en continu est en principe la meilleure technique. Elle consiste à injecter (ou à soutirer) le gaz à des vitesses constantes et suffisamment faibles pour qu'à tout instant l'équilibre thermodynamique soit réalisé. Cette technique a été proposée depuis longtemps et mise au point particulièrement par J. ROUQUEROL et al (demande de brevet français n°8810972)), qui ont montré sa faisabilité. Cette technique, telle qu'elle a été mise en oeuvre jusqu'à un passé récent, est cependant d'un domaine d'application limité, domaine qui dépend du couple nature de l'adsorbat-température. Ainsi pour l'azote à 77 K la pression partielle limite est de l'ordre de 0.4. Cette limitation est assez simple à expliquer. Pour obtenir des débits de gaz faibles et constants les appareils classiques utilisent une perte de charge apportée par un capillaire auquel on applique une pression constante. L'écoulement dans un tel système est régi approximativement par la loi de Poiseuille qui dit que le débit (Q) est proportionnel à la perte de charge mesurée entre l'entrée et la sortie du capillaire. Ainsi le débit n'est approximativement constant que si la perte de charge est elle même constante. Or lorsque la pression augmente dans la cellule échantillon, la pression en amont du capillaire étant fixe et généralement inférieure à 8 bars, la perte de charge diminue et par voie de conséquence le débit également. Pour assurer un débit constant, on est ainsi obligé lorsque l'on utilise de l'azote à 77 K de se limiter à une pression partielle finalement assez faible (environ 0,4). Il est néanmoins possible de tracer des isothermes d'adsorption complètes. On peut par exemple se placer à 77 K et utiliser un gaz dont la pression de vapeur à cette température est faible, comme l'argon par exemple (pression de vapeur à 77 K = 26KPa). Ceci introduit une contrainte importante car les propriétés texturales des solides sont, dans la plupart des cas, extraites des mesures basées sur l'adsorption d'azote et il est assez délicat de recouper ces mesures avec celles basées sur l'utilisation d'autres gaz. Ceci tient au fait que l'on connait avec une imprécision notable la surface occupée par une molécule de gaz (azote, argon, krypton) ainsi un décalage de 10 à 20 % entre des mesures azote et argon est courant (voir par exemple : "Adsorption, Surface Area and Porosity" S.J. GREGS et K.S.W. SING, Academic Press Inc., seconde édition, 1982). Une autre méthode concerne la régulation massique (US 4489593). La gamme de débits nécessaires à la réalisation de l'équilibre thermodynamique étant hors de portée des débitmètres conventionnels (débits inférieurs généralement à 0,7 ml/mn) il s'avère donc nécessaire d'utiliser des débitmètres spécialement adaptés (US 4489593) à la gamme : 0.05 à 0,7 ml/mn. L'appareil construit autour de ces débitmètres massiques est complexe et fait appel à une partie électronique sophistiquée, les débitmètres doivent être alimentés sous une pression tout à fait constante et placés dans une enceinte thermostatée. En effet, une variation de 1 °C de la température du gaz introduit dans les débitmètres se traduit par une variation d'environ 1,5 % du débit, ce qui est important. En pratique l'appareil dérivé du brevet US 4489593 utilise pour l'adsorption non pas un gaz pur mais un mélange. Ainsi pour la mesure de l'isotherme d'adsorption d'azote à 77 K un mélange azote et hélium est retenu, ce qui impose le recours à une ampoule de référence et donc complique singulièrement le système.

L'art antérieur est aussi illustré par le brevet US-A-4762 010 qui utilise une conduite de gaz entre les chambres de réservoir et de mesure, à orifice préalablement dimensionné et la revue International Laboratory (vol. 15, n° 1, janvier-février 1985, pages 37-46, Fairfield, Connecticut, US, J.E. SHIELDS et al.)

Un des objets de l'invention est de remédier aux inconvénients mentionnés ci-dessus.

Un autre objet de l'invention est de délivrer à tout instant dans le circuit de mesure un débit de gaz sensiblement constant tel que la pression de ce gaz dans le circuit de mesure contenant l'échantillon adsorbant soit sensiblement en équilibre.

On a découvert qu'en utilisant non pas des régulateurs de débits massiques comme cela est décrit dans le brevet US 4489593 ni des membranes ou des orifices à débit sonique mais des vannes régulées animées par un ou des générateurs de consignes programmables, on obtient, par régulation de pression dans un circuit réservoir correctement étalonné, des volumes sensiblement constants correspondant à des débits sensiblement constants et compris entre 0,025 et 25 ml/mn mesurés aux conditions de température et de pression standard,(20°C, 101 325 Pa) avantageusement compris entre 0,25 et 2 ml/mn et de préférence compris entre 0.1 et 0.5 ml/mn pour des pressions comprises entre 10 KPa et 500 KPa et avantageusement 30 KPa à 200 KPa, de préférence entre 50 KPa et 150 KPa. Le terme débit ou volume sensiblement constant signifie que les variations observées lors des enregistrements des isothermes d'adsorption-désorption d'un gaz tel que l'azote pour des pressions partielles comprises entre 0 et 1 sont en général inférieures à 5 %, avantageusement inférieures à 2 % et de manière préférée inférieures à 0,5 %. De manière pratique, pour assurer un volume ou un débit sensiblement constant à l'adsorption, il suffit de charger l'enceinte étalon à une pression supérieure à 80 KPa et de préférence supérieure à 140 KPa, par exemple 150 KPa. Pour assurer un volume ou un débit sensiblement constant à la désorption on s'assurera que la différence de pression entre le circuit de mesure et le circuit réservoir soit en règle générale d'au moins 200 Pa, par exemple de 250 Pa à $10^5$ Pa et de préférence d'au moins 1000 Pa, par exemple de 1300 Pa à 2000 Pa.

La pression du gaz dans le circuit de mesure est habituellement comprise entre 1 x $10^{-3}$ Pa et la pression de saturation du gaz à la température de l'azote liquide et de préférence entre 0,1 Pa et la pression de saturation.

De manière plus précise l'invention concerne un procédé de mesure d'adsorption d'un gaz adsorbé par un échantillon solide comprenant :

a) une étape de détermination à une température sensiblement constante et définie du volume d'un circuit réservoir devant contenir ledit gaz et d'un circuit de mesure comprenant une enceinte porte échantillon, effectuée en présence d'un fluide gazeux non condensable à la température de l'azote liquide,

b) une étape d'introduction de l'échantillon préalablement traité ou dans un état de structure approprié dans l'enceinte porte échantillon,

c) une étape de détermination du volume du circuit de mesure en présence de l'échantillon à une température sensiblement voisine de celle de l'azote liquide,

d) une étape de mise sous vide du circuit réservoir et du circuit de mesure contenant l'échantillon, à une pression d'environ 1 Pa à $10^{-7}$Pa le procédé étant caractérisé en ce que :

e) on introduit une quantité connue d'un gaz condensable à la température de l'azote liquide, dans le circuit réservoir,

f) on programme une chute de pression du gaz dans le circuit réservoir de 1 Pa à 7KPa par minute grâce à une vanne de régulation $VP_1$ de préférence à ouverture proportionnelle, de façon à transférer un volume sensiblement constant de gaz vers l'échantillon, une partie dudit gaz étant adsorbé sur celui-ci jusqu'à atteindre la pression de saturation de ce gaz à la température de l'azote liquide, ledit volume de gaz permettant d'être, à tout instant, sensiblement à l'équilibre thermodynamique et on mesure la pression du gaz dans le circuit réservoir à des intervalles de temps,

g) on mesure à des intervalles de temps la pression dudit gaz sur l'échantillon dans le circuit de mesure,

h) on détermine, par des moyens de traitement appropriés, l'isotherme d'adsorption de l'échantillon pour ledit gaz, à partir du volume du circuit réservoir (étape a), à partir de la quantité de gaz transféré du circuit réservoir vers l'échantillon (étape e et f), à partir de la pression du gaz dans le circuit de mesure (étape g) et à partir du volume du circuit de mesure en présence de l'échantillon (étape c).

Avec l'appareil selon l'invention, on peut s'affranchir des limitations de l'art antérieur. La mesure complète des isothermes d'adsorption-désorption est désormais possible même avec de l'azote à 77 K sans qu'il soit nécessaire d'avoir recours à des systèmes de régulation sonique ou à des régulations de débits massiques équipés de régulateurs complexes.

Par circuit réservoir, ou partie réservoir on entend le réservoir et les lignes dont le volume est compris entre une vanne d'isolation $V_1$, le capteur de pression $C_2$ et au moins une vanne de régulation $VP_1$.

Par circuit de mesure on entend le porte échantillon et les lignes le reliant à une vanne régulée $VP_1$, dont le volume est compris entre le capteur de pression $C_1$, les vannes d'isolation $V_4$ et $V_5$ et au moins une vanne de régulation $Vp_1$.

Par état de structure approprié, on entend un solide contenant de la matière organique tel qu'un échantillon de roche d'où l'on n'extrait pas cette matière organique par prétraitement et sur lequel on procède après avoir figé l'échantillon à 77° K environ, à l'adsorption de gaz et éventuellement à la désorption de ce gaz.

On peut, si nécessaire, procéder à une mesure de la désorption du gaz adsorbé par l'échantillon solide, celui-ci étant maintenu à une température sensiblement voisine de celle de l'azote liquide. On effectue alors, généralement les étapes suivantes :

1) on met sous vide le circuit réservoir à une pression d'environ 1 Pa à $10^{-7}$ Pa, l'échantillon demeurant à la pression de saturation du gaz adsorbé à la température de l'azote liquide,

2) on programme au moins une fois une augmentation de pression du gaz dans le circuit réservoir de 1 Pa à 7 KPa par minute par une vanne régulée $VP_2$ ou $VP_1$ de façon à transférer un volume sensiblement constant de gaz adsorbé sur l'échantillon vers le circuit réservoir jusqu'à ce que la pression dans le circuit de mesure soit supérieure d'au moins 200 Pa à la pression du circuit réservoir, ledit volume de gaz permettant d'être, à tout instant, sensiblement à l'équilibre thermodynamique au niveau de l'échantillon et on mesure à des intervalles de temps la pression du gaz dans le circuit réservoir ;

3) on mesure à des intervalles de temps la pression du gaz dans le circuit de mesure,

4) on détermine, par des moyens de traitement appropriés, l'isotherme de désorption de l'échantillon pour ledit gaz à partir du volume du circuit réservoir (étape a), de la quantité de gaz transféré de l'échantillon vers le circuit réservoir (étapes 1 et 2), de la pression dans le circuit de mesure (étape 3) et du volume du circuit de mesure en présence de l'échantillon (étape c). Par vanne régulée $VP_1$ ou $VP_2$, on entend une vanne régulée soit à ouverture proportionnelle soit à ouverture par impulsions.

Selon une caractéristique du procédé, la chute de pression du gaz dans le circuit réservoir lors de la phase d'adsorption et l'augmentation de pression du gaz dans le circuit réservoir lors de la phase de désorption sont avantageusement compris entre 10 Pa et 500 Pa.mn$^{-1}$, de préférence entre 20 Pa à 200 Pa.mn$^{-1}$ et de manière encore plus préférence entre 50 Pa à 150 Pa.mn$^{-1}$.

Selon une autre caractéristique du procédé, le gaz condensable à la température de l'azote liquide est choisi dans le groupe constitué par l'azote, l'argon, le krypton et le xénon et de préférence l'azote.

En multipliant dans des intervalles de temps pouvant aller de 10 ms à plusieurs dizaines de secondes, les mesures de pressions simultanément dans le circuit réservoir et dans le circuit de mesure, on peut en général décrire finement l'isotherme d'adsorption et par suite, si nécessaire celle de désorption. On peut donc déterminer au moins 2 points dans une gamme étroite de pressions partielles ou une pluralité de points sur une gamme plus étendue ou sur toute la gamme de pressions partielles pour décrire l'isotherme complet. Les volumes du circuit réservoir et du circuit de mesure sont parfaitement connus, puisqu'une capacité étalon dont le volume a été déterminé au mercure, permet de les déterminer. Le volume mort du circuit de mesure sera de préférence mesuré à chaque essai, l'échantillon étant en place et le porte échantillon étant plongé dans un bain d'azote liquide à niveau sensiblement constant maintenu pendant toute la durée des mesures.

L'invention concerne également l'appareil pour la mise en oeuvre du procédé, aussi bien lors de la phase d'adsorption que lors de la phase de désorption. Il comprend :

- un circuit réservoir (1),
- un circuit de mesure (2) comprenant un porte échantillon (3) et des moyens de maintien (13) de la température à celle de l'azote liquide reliés au porte-échantillon, le circuit réservoir et le circuit de mesure étant dans une enceinte thermostatée (50),
- des moyens (7) de mise sous vide et des moyens de mesure du vide (31) du circuit réservoir et du circuit de mesure,
- des moyens de mesure (21, 22) et de régulation de la température du circuit réservoir et du circuit de mesure dans ladite enceinte,
- une alimentation (10) en gaz non condensable à la température de l'azote liquide reliée au circuit réservoir,
- une alimentation (9) en gaz condensable à la température de l'azote liquide, connectée au circuit de mesure.

Le dit appareil est caractérisé en ce qu'il comporte en combinaison :

- des moyens de détermination du volume du gaz dans le circuit réservoir comprenant au moins un capteur de pression $C_2$ adapté à mesurer la pression du gaz dans le circuit réservoir en fonction du temps,
- des moyens de détermination du volume de gaz dans le circuit de mesure comprenant au moins un capteur de pression $C_1$ adapté à mesurer la pression du gaz dans le circuit de mesure en fonction du temps,
- au moins une vanne régulée de préférence à ouverture proportionnelle ($Vp_1$) reliant le circuit réservoir au circuit de mesure,
- des moyens (40) de programmation de pression reliés au capteur de pression $C_2$ adaptés à asservir la vanne régulée $Vp_1$, et
- des moyens de saisie et de traitement (14) des informations adaptés à déterminer la mesure de l'adsorption du gaz dans l'échantillon et éventuellement la mesure de la désorption du gaz de l'échantillon reliés aux moyens de programmation (40) de pression, aux moyens de détermination des volumes du gaz dans le circuit réservoir, aux moyens de détermination du volume en gaz dans le circuit de mesure et aux moyens de maintien (13) de la température à celle de l'azote liquide dans le circuit de mesure et des moyens de mesure (21, 22) et de régulation de la température du circuit réservoir et du circuit de mesure.

Selon une caractéristique de l'appareil, les moyens de programmation de pression comprennent un microprocesseur délivrant un signal directement proportionnel à l'écart entre la mesure de la pression à des intervalles de temps et une valeur consigne de la pression du circuit réservoir programmée en fonction du temps, ledit signal permettant l'asservissement de la vanne régulée.

Ces intervalles de temps pourront être choisis avantageusement constants.

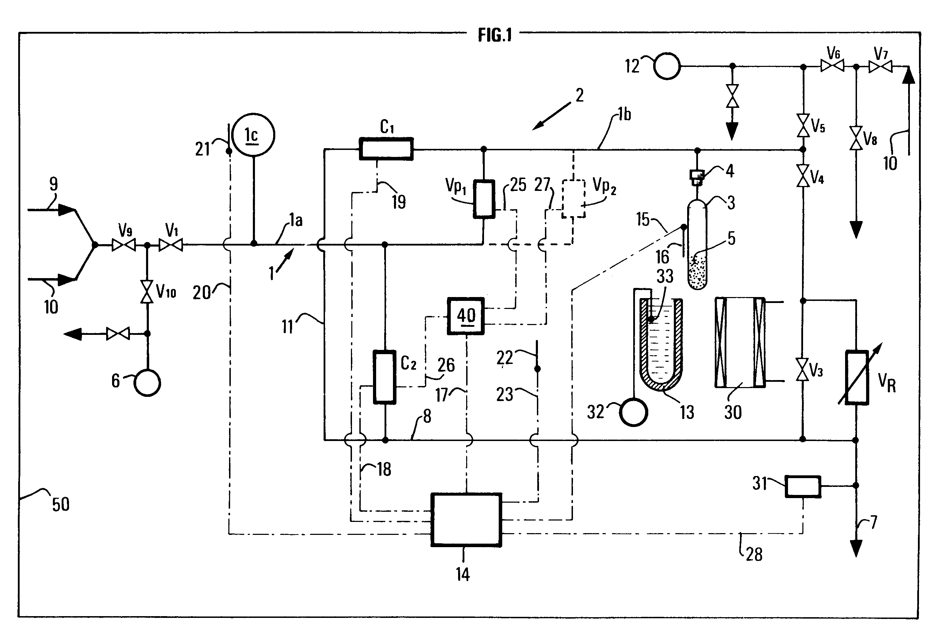

Un exemple de mode de réalisation de l'appareil selon l'invention est reporté sur la figure 1, à titre illustratif.

Avant d'être prétraités, les solides ou adsorbants ont de préférence été débarrassés de matières organiques, d'acides ou de bases décomposables. Ils sont généralement sous forme d'oxydes et ils peuvent contenir dans leur structure, de la vapeur d'eau, du $CO_2$, de l'air ou des vapeurs inertes adsorbés. Une vanne régulée $V_R$ à ouverture réglable permet d'amener progressivement le porte-échantillon à un vide de préférence voisin de 0,1 Pa à 0,01 Pa, puis par une vanne $V_3$ à une valeur de vide comprise entre $10^{-3}$ et $10^{-5}$ Pa correspondant à celle de la mesure qui est mesurée par une jauge à vide 31 à partir d'une pompe turbomoléculaire 7 d'un débit de 50 l/s pour l'azote, par exemple.

Le prétraitement en température, qui est spécifique d'un solide est assuré par un four 30 équipé d'un programmateur (non représenté).

Selon une variante du prétraitement, celui-ci peut être assuré par balayage sous gaz vecteur inerte sur un poste adapté localisé hors de l'appareil selon l'invention.

L'appareil selon l'invention comprend un circuit réservoir 1 comprenant un réservoir à gaz 1c relié à un circuit de mesure 2 contenant un porte échantillon 3 isolé par une vanne d'étanchéité 4. Le porte échantillon 3 contient un échantillon solide ou adsorbant 5. Une enceinte régulée 50 maintient le circuit réservoir et le circuit de mesure à une température appropriée et sensiblement constante.

Le circuit réservoir a un volume parfaitement connu déterminé une fois pour toute à la mise en route de l'appareil grâce à une capacité 6 étalonnée au mercure. Il sert de stockage à l'azote gazeux qui sera transféré par des lignes 1a, 1b vers le circuit de mesure. Au moins un capteur de pression différentielle $C_2$ y est associé ($5.10^{-5}$ Pa, pleine échelle utilisé pour l'adsorption), connecté à la ligne 1a et à la pompe à vide 7 par une ligne 8. Un système de trois vannes d'arrêt $V_1$, $V_9$ et $V_{10}$ est rattaché au circuit réservoir 1 et aux alimentations en azote 9 et en hélium 10 et permet la purge et la charge de ce circuit en ces gaz à une pression souhaitée. Le circuit mesure comporte au moins une vanne $VP_1$ à ouverture proportionnelle (marque déposée MKS modèle 248A, par exemple) qui, asservie à une consigne de pression, permet de transférer par les lignes 1a et 1b l'azote du circuit réservoir vers le circuit de mesure, lors de l'étape d'adsorption. Lors de l'étape de désorption, cette même vanne peut être utilisée par une simple modification ou bien, pour des raisons de commodité, on peut adjoindre au circuit une autre vanne $VP_2$ à ouverture proportionnelle (liaison en pointillé sur la figure 1) pour le transfert du gaz adsorbé sur l'échantillon vers le circuit réservoir par les lignes 1b et 1a. Ces vannes représentent l'élément principal en combinaison avec une régulation programmée de pression pour coopérer en vue de l'obtention d'un débit sensiblement constant quelle que soit la pression. Un capteur de pression différentielle $C_1$ ($10^5$ Pa pleine échelle) relié au circuit de mesure et à la pompe à vide 7 par les lignes 11 et 8 permet de connaître à tout moment la pression de gaz dans le circuit de mesure.

Enfin, par une vanne $V_5$, est rattachée à ce circuit de mesure une capacité étalon 12 étalonnée au mercure et un système de purge comprenant trois vannes $V_6$, $V_7$, $V_8$ permettant d'introduire, à partir d'une alimentation 10 en hélium, une quantité connue d'hélium dans le circuit de mesure et de déterminer pour chaque adsorbant son volume mort dans les conditions de la mesure (l'échantillon plongeant dans l'azote liquide d'un récipient cryogénique 13 au niveau qui est celui respecté pendant la mesure).

Un système de régulation de niveau d'azote liquide 32 maintient grâce à une sonde de niveau 33 le niveau dans le récipient 13.

Un système de programmation 40 relié à la vanne $V_{p1}$, par une ligne 25 et au capteur de pression différentielle $C_2$ par une ligne 26 permet d'asservir la vanne $Vp_1$ à la chute de pression dans le circuit réservoir. Ce système 40 peut aussi asservir par une ligne en pointillé 27 la vanne $Vp_2$ utilisée lors de la désorption du gaz de l'échantillon, à l'augmentation de pression du gaz dans le circuit réservoir, celle-ci étant mesurée par le capteur de pression $C_2$ grâce à la ligne 18.

Des moyens 14 d'automatisation de l'ensemble de l'appareil, de saisie et de traitement des informations sont reliés par une ligne 15 à une sonde 16 de température du porte échantillon dans le récipient cryogénique, par une ligne 17 au système de programmation 40, par une ligne 18 au capteur de pression $C_2$, par une ligne 19 au capteur de pression $C_1$ et par une ligne 20 à une sonde de température 21 disposée sur le réservoir 1c de gaz. Enfin, les moyens 14 de saisie et de traitement reçoivent les informations d'une sonde de température 22 de l'enceinte régulée, par une ligne 23 et de la jauge à vide 31 par une ligne 28.

L'appareil fonctionne dans une enceinte thermostatée dont la température est habituellement régulée à plus ou moins 0,1 °C par des moyens appropriés pour réaliser des mesures précises de volumes et de pressions.

Les mesures d'adsorption ou de désorption en continu nécessitent un appareillage de régulation de la température au niveau de l'échantillon sensiblement stable. L'écart de température doit être en général inférieur à 0,5 °C et de préférence inférieur à 0,1 °C. Le niveau d'azote liquide dans le récipient cryogénique est régulé en général à 0,3 mm près et de préférence à 0,1 mm près.

La conduite d'une mesure est généralement effectuée de la façon suivante :

Etalonnage du volume mort :

Cet étalonnage est en général effectué à l'hélium pur à 99,9995 % et permet de déterminer avec précision le volume libre entourant l'échantillon dans le circuit de mesure. Cet étalonnage est conduit automatiquement en début de mesure à partir d'un ordinateur, qui peut être un micro-ordinateur multitache relié à une unité de saisie. Il consiste à admettre de l'hélium dans la capacité étalon à une pression désirée, puis à le détendre dans le circuit de mesure de l'appareillage, l'échantillon étant en place et le porte échantillon plongeant dans l'azote liquide. La loi de Mariotte permet de calculer ce volume mort.

Mesure d'adsorption :

Tout le circuit mesure de l'appareil étant sous vide mais isolé de la source de vide, on transfère de l'azote du réservoir vers le porte échantillon plongeant dans l'azote liquide grâce à la vanne proportionnelle $Vp_1$ qui assure par programmation une chute de pression régulière au niveau du réservoir et donc un débit sensiblement constant de l'ordre de 0,2 ml/mn par exemple. Ce débit est généralement tel que l'équilibre thermodynamique soit atteint à chaque instant.

Mesure de désorption :

Lorsque la pression de saturation de l'azote gazeux est atteinte au dessus de l'échantillon, on peut éventuellement procéder à l'étape de désorption du gaz adsorbé sur l'échantillon.

Le circuit réservoir étant vide, la vanne proportionnelle de désorption $Vp_2$ permet de réaliser le transfert inverse de l'azote du circuit mesure vers le circuit réservoir à un débit sensiblement constant correspondant par exemple à une augmentation de pression programmée de 100 Pa par minute dans le circuit réservoir. La désorption étant limitée par l'égalité des pressions entre les deux circuits de l'appareillage, on peut procéder par étapes de désorption. On peut par exemple à divers intervalles de temps, stopper le transfert du gaz désorbé, vider le réservoir et éventuellement poursuivre l'étape de désorption jusqu'à atteindre une pression de gaz dans le circuit de mesure de l'ordre de 200 Pa.

Au cours de l'adsorption comme de la désorption, l'ensemble des ouvertures et fermetures des vannes sont gérées par l'ordinateur, lequel exécutera également les tests logiques pour vérifier l'état du système, la qualité du vide atteint, la croissance, la décroissance ou la stabilité de la pression.

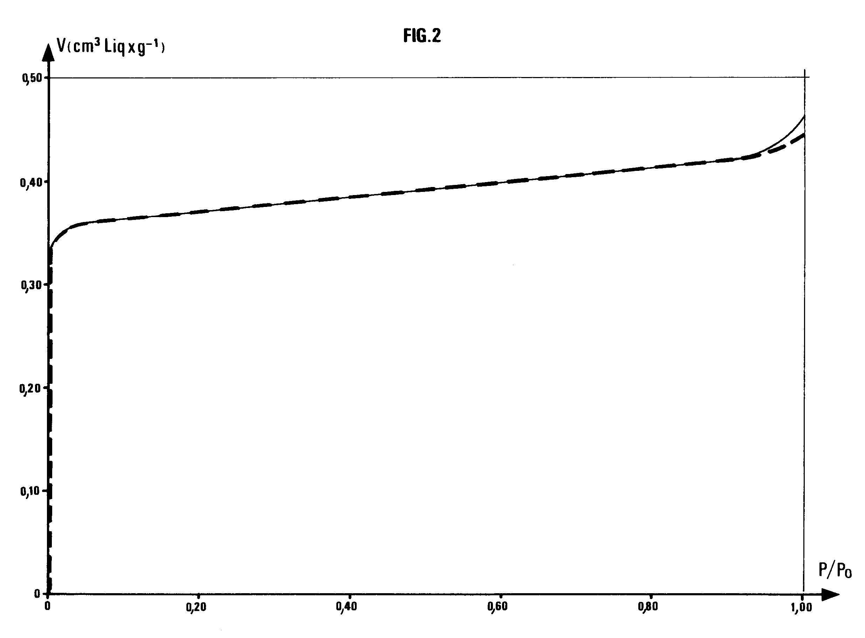

Tous les calculs sont effectués à partir des acquisitions de pression de températures et de temps effectuées et stockées par un ordinateur, à une fréquence très élevée (1 point par tranche de 10 s). Un tableau de résultats et les courbes d'adsorption-désorption sont alors édités (figure 2).

**Calculs des quantités adsorbées**

1. adsorption

```
Soit   V  = volume du circuit réservoir ........................cm³
       V1 = volume mort du circuit mesure .................... cm³
       P  = pression lue au niveau du circuit réservoir....... Pa
       P' = pression lue au niveau du circuit de mesure....... Pa
       T  = temps ............................................ minutes
       D  = débit............................................. cm³/minute
       V2 = quantité d'azote gazeux transvase du circuit
            réservoir dans le circuit mesure en fonction
            du temps T...................................... cm³
       V3 = quantité d'azote gazeux nécessaire au remplissage
            du circuit mesure .............................. cm³
       t  = température dans l'enceinte thermostatée......... degres c.
       VA = volume adsorbé gazeux........................... cm³ /g
       V'A = volume adsorbé liquide......................... cm³ /g
       VV = volume total introduit à l'adsorption à la
            pression partielle de 1 ....................... cm³
       VD = volume restant adsorbé à la pression P'n considérée cm³
       PO = pression de saturation ........................... Pa
       Pp = pression partielle.
       M  = poids de l'échantillon.
```

A partir de ces paramètres, et de chacune des valeurs calculées, on détermine le débit donc le volume, à chaque pression partielle ou en fonction du temps.

$$D = (((VxP1x293)/101325(273 + t)) - ((VxPnx293)/101325(273 + t))/T$$

P1 = pression de départ

Pn = pression à P'/P0 = 0,9

Pour chaque pression acquise au niveau de l'échantillon (P'1, P'2, P'3..P'n) :

On a :

V2 = DxT

V3 = (V1xP'nx293)/101325(273+t)

VA = (V2-V3)/M

V'A = VAxk

Pp = P'/P0

k étant le coefficient de conversion de l'azote gazeux en azote liquide et égal à 0,00155 aux conditions normales (0°C, 101325 Pa) ou égal 0,00144 aux conditions standard (20°C, 101325 Pa).

Il suffit de tracer une courbe en portant en ordonnée les volumes adsorbés liquides V'A ou gazeux (VA) par unité de masse tel que défini sur la courbe V'A et en abscisse les pressions partielles correspondantes pour obtenir l'isotherme d'adsorption (fig.2 courbe pointillée).

2. Désorption

Soit

VV    = Volume total introduit à l'adsorption

D    = (VxPnx293)/101325xT(273+t)
Pn   = Pression à P/P0 = 0,3
V'2  = Quantité d'azote gazeux transféré du circuit mesure vers le circuit réservoir.
    Pour chaque pression acquise au niveau de l'échantillon (P'1, P'2, P'3, P'n,...)
        V'2 = DxT
        V3 = (V1xP'x293)/101325(273+t)
    On détermine la quantité restant adsorbée $V_D$ en fonction de chaque pression partielle jusqu'à une pression partielle dans le circuit de mesure voisine de 0.
        VD = VV-(V'2+V3)/M
        Pp = P'/P0
        V'D = VD x k        k = coefficient de conversion
    La courbe isotherme de désorption sera obtenue en portant en ordonnée les volumes liquides ou gazeux restant adsorbés et en abscisse les pressions partielles correspondantes (fig.2, trait fin continu).
    L'utilisation la plus courante, de l'appareil selon l'invention est l'étude de la texture des matériaux, par adsorption physique, par exemple par adsorption d'azote, d'argon ou de tout autre gaz pouvant servir à caractériser la texture des solides (voir par exemple : "Adsorption, Surface Area and Porosity" S.J. GREGG et K.S.W. SING, Academic Press Inc., seconde édition, 1982) à la température choisie, comme par exemple la température de l'azote liquide pour l'adsorption d'azote, en ayant en outre, la possibilité de décrire la courbe isotherme complète d'adsorption-désorption. Tous les phénomènes de physisorption ou de chimisorption, ainsi que l'étude cinétique des réactions (isothermes ou non) peuvent être observés sur cet appareil en adaptant la gamme des capteurs et les volumes des capacités aux besoins.
    On peut déterminer, selon un autre mode de calcul les volumes liquides ou gazeux au coefficient K près adsorbés sur l'échantillon pendant l'adsorption et restant adsorbés pendant la désorption.

Soit  V  = Volume du circuit réservoir ...................... $cm^3$

V1 = Volume mort du circuit mesure ................... $cm^3$

P  = Pression lue au niveau du circuit

réservoir à la pression partielle considérée ...... Pa

P' = Pression lue au niveau du circuit mesure à la

pression partielle considérée .................... Pa

V2 = Quantité d'azote gazeux transféré du circuit

réservoir vers le circuit mesure à l'adsorption .. $cm^3$

V3 = La quantité d'azote gazeux nécessaire au

remplissage du cicuit mesure à la pression

partielle considérée ........................... $cm^3$

V4 = Quantité d'azote gazeux transféré du circuit mesure vers le circuit réservoir à la désorption . $cm^3$

t  = Température de l'enceinte thermostatée ............ °C

VA = Volume adsorbé gazeux par unité de poids ....... $cm^3/g$

V'A = Volume adsorbé liquide par unité de poids ...... $cm^3/g$

VV = Volume total d'azote gazeux transféré à

l'adsorption soit pour une pression

partielle de 1 ................................ $cm^3$

VD = Volume restant adsorbé gazeux à la pression

partielle considérée par unité de poids.

V'D = Volume liquide restant adsorbé à la pression

partielle considéré par unité de poids.

Po = Pression de saturation

Pp = pression partielle

n  = nombre de  scrutations de n = 0 à n = I

M  = masse d'échantillon en grammes

## Adsorption

Les paramètres suivants sont calcules :

Calcul du volume de gaz transféré du circuit réservoir vers le circuit de mesure à la pression partielle considérée

$$V2 = \left[\frac{V \times 273}{760}\right] \left[\frac{P_{n=0}}{273 + t_{n=0}} - \frac{Pn}{273 + t_n}\right]$$

Calcul de la quantité d'azote gazeux nécessaire au remplissage du circuit de mesure à la pression partielle considérée.

$$V3 = \frac{V1 \times P'n \times 273}{760 \times (273 + t_n)}$$

Volume adsorbé d'azote gazeux à la pression partielle considérée par gramme d'échantillon

$$VA = \frac{V2 - V3}{M}$$

Volume adsorbé liquide d'azote à la pression partielle considérée par gramme.

$$V'A = VA \times 0{,}00155$$

La courbe isotherme d'adsorption sera obtenue à partir des paramètres cités ci-haut.

## Désorption

Les paramètres suivants sont calculés :

Volume d'azote gazeux transféré du circuit de mesure vers le circuit réservoir à la pression partielle considérée

$$V4 = \left[\frac{V \times 273}{760}\right]\left[\frac{P_{n=I}}{273 + t_{n=I}} - \frac{Pn}{273 + t_n}\right]$$

Quantité d'azote gazeux nécessaire au remplissage du circuit mesure à la pression partielle considérée

$$V3 = \frac{V1 \times P'n \times 273}{760 \times (273 + t_n)}$$

Volume d'azote gazeux restant adsorbé à la pression partielle considérée.

$$VD = \frac{VV - (V4 + V3)}{M} \qquad \text{avec } VV = V2_{n=I}$$

Volume d'azote liquide restant adsorbé à la pression partielle considérée.

$$V'D = 0{,}00155 \times VD$$

La courbe isotherme de désorption sera obtenue à partir des paramètres cités ci-haut.

L'exemple suivant illustre l'invention, sans pour autant en limiter la portée.

## EXEMPLE 1

On se propose de mesurer, à l'aide de l'appareil selon l'invention, la surface spécifique BET, en utilisant l'azote comme adsorbat (à la température de 77 K), d'une zéolithe de type NaY commerciale : LZY52 (origine Union Carbide).

## Prétraitement

Une masse d'environ 150 mg de la zéolithe NaY dont on désire mesurer la surface est prétraitée, sur l'appareil selon l'invention, en suivant le protocole suivant : l'échantillon est mis sous vide à 20 °C jusqu'à ce que la valeur du vide soit comprise entre $7{,}8.10^{-3}$ Pa et $8.10^{-4}$ Pa, la température de l'échantillon est portée à 500 °C par paliers successifs :
- de 20 °C à 100 °C à 2 °C/mn
- palier de 15 mn à 100 °C
- de 100 °C à 200 °C à 2 °C/mn
- palier de 15 mn à 200 °C
- de 200 °C à 400 °C à 5 °C/mn
- palier de 1 heure à 400 °C
- de 400 °C à 500 °C à 5 °C/mn
- palier de 12 heures à 500 °C

Après avoir ramené la température à 20 °C, l'échantillon dont la masse déterminée par pesée est égale à 0,1149 g, est transféré dans le circuit de mesure de l'appareil selon l'invention.

**Mesure**

La température de l'enceinte régulier est de 21,5 °C. La cellule porte échantillon est immergée dans un réservoir rempli d'azote liquide dont le niveau est maintenu constant par un système de régulation, les circuits mesure et réservoir de l'appareil sont mis sous vide (valeur du vide comprise entre $1,3 \cdot 10^{-4}$ Pa et $1,3 \cdot 10^{-5}$ Pa). Le volume du circuit réservoir déterminé préalablement est de 137,98 ml. Le volume mort du circuit de mesure est déterminé à l'hélium et est égal à 41,71 ml.

Après la détermination du volume mort, l'échantillon est mis sous vide (valeur de $1,3 \cdot 10^{-4}$ Pa, la cellule porte échantillon étant toujours à la température de 77 K. La pression initiale de l'azote dans le réservoir est de 171 KPa. L'azote est alors transféré sur l'échantillon avec programmation d'une chute de pression dans le réservoir de 133,32 $Pa.mn^{-1}$ correspondant à un volume de 0,168 ml donc à débit moyen de 0,168 ml/mn, jusqu'à ce que la pression partielle de l'azote sur l'échantillon soit sensiblement égale à 1. L'isotherme d'adsorption est alors obtenue grâce à l'acquisition durant cette phase de mesure de 887 valeurs de pression du circuit de réservoir et du circuit de mesure à des intervalles de temps de 30 secondes (fig.2, courbe en pointillé).

EXEMPLE 2

L'échantillon de zéolithe ayant adsorbé un volume global d'azote de 0,448 $ml.g^{-1}$ liquide soit 289 $ml.g^{-1}$ gazeux (TPN) selon l'exemple 1, on procède ensuite à l'acquisition de l'isotherme de désorption. Pour cela le réservoir est mis sous vide et on détend l'azote contenu dans le circuit de mesure vers le réservoir avec programmation d'une augmentation de pression dans le réservoir de 133,32 Pa/mn correspondant à un volume de 0,179 ml donc à un débit moyen de 0,179 ml/mn. Dès que la différence entre la pression sur l'échantillon et la pression du circuit réservoir est égale à 666 Pa, on stoppe les acquisitions et on met sous vide le réservoir avant de reprendre le transfert de l'azote. Au cours de l'acquisition de l'isotherme de désorption, on répète l'opération décrite précédemment cinq fois. Comme pour la partie adsorption on enregistre un nombre élevé de valeurs de pression pour décrire avec précision la branche de désorption de l'isotherme.

L'isotherme de désorption complète de la zéolithe étudiée est reportée sur la figure 2 (trait fin).

On a déterminé, par les informations acquises et les équations ci-dessus, que la surface de la zéolithe NaY étudiée, déterminée selon la théorie classique BET était de 871 $m^2/g$, l'erreur sur cette valeur étant estimée à plus ou moins 2 %.

A titre de comparaison, la surface BET de la zéolithe NaY, de référence LZY52, indiquée sur la brochure commerciale de ce produit est de 900 $m^2/g$ (BET, un point).

**Revendications**

1. Procédé de mesure d'adsorption d'un gaz adsorbé par un échantillon solide comprenant,

a) une étape de détermination à une température sensiblement constante et définie du volume d'un circuit réservoir devant contenir le dit gaz et d'un circuit de mesure comprenant une enceinte porte échantillon, effectuée en présence d'un fluide gazeux non condensable à la température de l'azote liquide,

b) une étape d'introduction de l'échantillon préalablement traité ou dans un état de structure approprié dans l'enceinte porte échantillon,

c) une étape de détermination du volume du circuit de mesure en présence de l'échantillon à une température sensiblement voisine de celle de l'azote liquide,

d) une étape de mise sous vide du circuit réservoir et du circuit de mesure contenant l'échantillon, à une pression d'environ 1 Pa à $10^{-7}$ Pa, le procédé étant caractérisé en ce que :

e) on introduit une quantité connue d'un gaz condensable à la température de l'azote liquide, dans le circuit réservoir,

f) on programme une chute de pression du gaz dans le circuit réservoir de 1 Pa à 7 KPa par minute grâce à une vanne de régulation $VP_1$, de façon à transférer un volume sensiblement constant de gaz vers l'échantillon, une partie du dit gaz étant adsorbé sur celui-ci jusqu'à atteindre la pression de saturation de ce gaz à la température de l'azote liquide, ledit volume de gaz permettant d'être, à tout instant, sensiblement à l'équilibre thermodynamique, et on mesure la pression du gaz dans le circuit réservoir à des intervalles de temps,

g) on mesure à des intervalles de temps la pression dudit gaz sur l'échantillon dans le circuit de mesure,

h) on détermine, par des moyens de traitement appropriés, l'isotherme d'adsorption de l'échantillon pour ledit gaz, à partir du volume du circuit réservoir (étape a), à partir de la quantité de gaz transféré du circuit réservoir vers l'échantillon (étapes e et f) à partir de la pression du gaz dans le circuit de mesure (étape g) et à partir du volume du circuit de mesure en présence de l'échantillon (étape c).

2. Procédé de mesure de désorption du gaz adsorbé par l'échantillon solide selon la revendication 1, ledit échantillon étant à une température sensiblement voisine de celle de l'azote liquide caractérisé en ce que :
1) on met sous vide le circuit réservoir à une pression d'environ 1 Pa à $10^{-7}$ Pa, l'échantillon demeurant à la pression de saturation du gaz adsorbé à la température de l'azote liquide,
2) on programme au moins une fois une augmentation de pression du gaz dans le circuit réservoir de 1 Pa à 7 KPa par minute, par une vanne regulée $VP_2$ ou $VP_1$ de façon à transférer un volume sensiblement constant de gaz adsorbé sur l'échantillon vers le circuit réservoir jusqu'à ce que la pression dans le circuit de mesure soit supérieure d'au moins 200 Pa à la pression du circuit réservoir, ledit volume de gaz permettant d'être, à tout instant, sensiblement à l'équilibre thermodynamique au niveau de l'échantillon et on mesure à des intervalles de temps la pression du gaz dans le circuit réservoir ;
3) on mesure à des intervalles de temps la pression du gaz dans le circuit de mesure,
4) on détermine, par des moyens de traitement appropriés, l'isotherme de désorption de l'échantillon pour ledit gaz à partir du volume du circuit réservoir (étape a), de la quantité de gaz transféré de l'échantillon vers le circuit réservoir (étapes 1 et 2), de la pression dans le circuit de mesure (étape 3) et du volume du circuit de mesure en présence de l'échantillon (étape c, revendication 1).

3. Procédé selon la revendication 1 ou 2, dans lequel le gaz condensable à la température de l'azote liquide est choisi dans le groupe constitué par l'azote, l'argon, le krypton et le xénon et de préférence l'azote.

4. Procédé selon l'une des revendications 1 à 3 dans lequel l'échantillon adsorbe le volume de gaz (revendication 1, étape f) ou désorbe le volume de gaz (étape 2, revendication 2) correspondant à un débit de 0,025 à 25 millilitres par minute et de préférence de 0,1 à 0,5 ml/mn aux conditions de température et de pression standard.

5. Procédé selon l'une des revendications 1,3 à 4 dans lequel lors de la phase d'adsorption, la pression dans le circuit réservoir est 10 KPa à 500 KPa, de préférence de 50 à 150 KPa, et la pression dans le circuit de mesure est comprise entre $1.10^{-3}$ Pa et la pression de saturation du gaz à la température de l'azote liquide.

6. Procédé selon l'une des revendications 2 à 4 dans lequel la différence de pression entre le circuit de mesure et le circuit réservoir lors de la phase de désorption, est d'au moins 200 Pa, de préférence d'au moins 1000 Pa.

7. Procédé selon l'une des revendications 1 à 6 dans lequel on programme une chute de pression dudit gaz condensable dans le circuit réservoir lors de la phase d'adsorption, et une augmentation de pression dudit gaz condensable lors de la phase de désorption dans le circuit réservoir, de 50 Pa à 150 Pa.mn$^{-1}$.

8. Appareil pour déterminer la mesure de l'adsorption ou la mesure de la désorption d'un gaz adsorbé par un échantillon solide comprenant en combinaison :
   - un circuit réservoir (1),
   - un circuit de mesure (2) comprenant un porte échantillon (3) et des moyens de maintien (13) de la température à celle de l'azote liquide reliés au porte échantillon, le circuit réservoir et circuit de mesure étant dans une enceinte thermostatée (50),
   - des moyens (7) de mise sous vide et des moyens de mesure du vide (3l) du circuit réservoir et du circuit de mesure.
   - des moyens de mesure (21, 22) et de régulation de la température du circuit réservoir et du circuit de mesure dans ladite enceinte,
   - une alimentation (10) en gaz non condensable à la température de l'azote liquide reliée au circuit réservoir,
   - une alimentation (9) en gaz condensable à la température de l'azote liquide, connectée au circuit de mesure, ledit appareil étant caractérisé en ce qu'il comporte en combinaison :
   - des moyens de détermination du volume du gaz dans le circuit réservoir comprenant au moins un capteur de pression $C_2$ adapté à mesurer la pression du gaz dans le circuit réservoir en fonction du temps,
   - des moyens de détermination du volume de gaz dans le circuit de mesure comprenant au moins un

capteur de pression $C_1$ adapté à mesurer la pression du gaz dans le circuit de mesure en fonction du temps,
- au moins une vanne de régulation ($VP_1$) reliant le circuit réservoir au circuit de mesure,
- des moyens (40) de programmation de pression reliés au capteur de pression $C_2$ adaptés à asservir la vanne de régulation $VP_1$, et
- des moyens de saisie et de traitement (14) des informations adaptés à déterminer la mesure de l'adsorption du gaz dans l'échantillon et la mesure de la désorption du gaz de l'échantillon reliés aux moyens de programmation (40) de pression, aux moyens de détermination des volumes du gaz dans le circuit réservoir, aux moyens de détermination du volume du gaz dans le circuit de mesure, aux moyens de maintien (13) de la température à celle de l'azote liquide dans le circuit de mesure et des moyens de mesure (21, 22) et de régulation de la température du circuit réservoir et du circuit de mesure.

9. Appareil selon la revendication 8, caractérisé en ce qu'il comprend des moyens (VR) de prétraitement sous vide régulé et en programmation de température (30) reliés au circuit de mesure, aux moyens de mise sous vide et de mesure du vide et aux moyens de saisie et traitement des informations.

10. Appareil selon la revendication 8 ou 9, caractérisé en ce que les moyens de programmation de pression (40) comprennent un microprocesseur délivrant un signal directement proportionnel à l'écart entre la mesure de la pression à des intervalles de temps et une valeur de consigne de la pression du circuit réservoir programmée en fonction du temps, ledit signal permettant l'asservissement de la vanne de régulation.

11. Appareil selon l'une des revendications 8 à 10, caractérisé en ce qu'il comprend au moins une capacité (6) reliée à ladite alimentation en gaz condensable et à ladite alimentation en gaz non condensable.

12. Appareil selon l'une des revendications 8 à 11, caractérisé en ce que les moyens de maintien de température à celle de l'azote liquide reliés au circuit de mesure comprennent une alimentation en azote liquide reliée à un régulateur de niveau d'azote liquide dans un récipient cryogénique (13).

13. Appareil selon l'une des revendications 8 à 12 caractérisé en ce qu'il comprend au moins une vanne d'isolation V4 située entre les moyens de mise sous vide et le circuit de mesure.

14. Appareil selon l'une des revendications 8 à 13 dans lequel la vanne de régulation est une vanne à ouverture proportionnelle.

15. Utilisation de l'appareil selon l'une des revendications 8 à 14 dans un procédé de mesure d'aire spécifique d'un échantillon solide adsorbant.

## Patentansprüche

1. Verfahren zur Messung der Adsorption eines durch eine feste Probe adsorbierten Gases, umfassend:
   a) einen Schritt zur Bestimmung des Volumens eines Speicherkreisesvor Einschließen des Gases und eines Meßkreises, der einen Probenhalterungsraum umfaßt, bei einer im wesentlichen konstanten und definierten Temperatur, welcher in Anwesenheit eines gasförmigen, bei der Temperatur des flüssigen Stickstoffs nicht-kondensierbaren Fluids durchgeführt wird,
   b) einen Schritt zur Einführung der zuvor behandelten oder sich in einem geeigneten Strukturzustand befindlichen Probe in den Probenhalterungsraum,
   c) einen Schritt zur Bestimmung des Volumens des Meßkreises in Anwesenheit der Probe bei einer im wesentlichen zu derjenigen des flüssigen Stickstoffes benachbarten Temperatur,
   d) einen Schritt zur Evakuierung des Speicherkreises und des die Probe enthaltenen Meßkreises auf einen Druck von ungefähr 1 Pa bis $10^{-7}$ Pa, wobei das Verfahren dadurch gekennzeichnet ist, daß:
   e) man eine bekannte Menge eines bei der Temperatur des flüssigen Stickstoffes kondensierbaren Gases in den Behälterkreis einführt,
   f) man eine Druckerniedrigung des Gases in dem Speicherkreis von 1 Pa bis 7 kPa pro Minute mittels eines Regelventils ($VP_1$) programmiert, derart, um ein im wesentlichen konstantes Volumen des Gases hin zur Probe überzuleiten, wobei ein Teil des Gases an dieser bis zum Erreichen des Sättigungsdruckes dieses Gases bei der Temperatur des flüssigen Stickstoffes adsorbiert wird, das Volumen des Gases gestattet, sich zu jedem Zeitpunkt im wesentlichen im thermodynamischen Gleichgewicht zu befinden, und man den Druck des Gases in dem Speicherkreis in Zeitintervallen mißt,

g) man in den Zeitintervallen den Druck des Gases auf die Probe in dem Meßkreis mißt,

h) man durch geeignete Behandlungseinrichtungen die Adsorptionsisotherme der Probe für das Gas auf der Grundlage des Volumens des Speicherkreises (Schritt a), auf der Grundlage der Menge des aus dem Speicherkreis hin zur Probe übergeleiteten Gases (Schritte e und f), auf der Grundlage des Druckes des Gases in dem Meßkreis (Schritt g) und auf der Grundlage des Volumens des Meßkreises in Anwesenheit der Probe (Schritt c) bestimmt.

2. Verfahren zur Messung der Desorption eines durch eine feste Probe adsorbierten Gases gemäß Anspruch 1, wobei sich die Probe auf einer im wesentlichen zu derjenigen des flüssigen Stickstoffes benachbarten Temperatur befindet, dadurch gekennzeichnet, daß:

1) man den Speicherkreis auf einen Druck von ungefähr 1 Pa bis $10^{-7}$ Pa evakuiert, wobei die Probe auf einem Sättigungsdruck des adsorbierten Gases bei der Temperatur des flüssigen Stickstoffes bleibt,

2) man wenigstens einmal eine Druckerhöhung des Gases in dem Speicherkreis von 1 Pa bis 7 kPa pro Minute durch ein Regelventil (VP$_2$) oder (VP$_1$) programmiert, derart, um ein im wesentlichen konstantes Volumen des adsorbierten Gases über der Probe hin zu dem Speicherkreis überzuleiten, bis der Druck in dem Meßkreis größer als wenigstens 200 Pa zu dem Druck des Speicherkreises ist, wobei das Volumen des Gases gestattet, sich zu jedem Zeitpunkt im wesentlichen im thermodynamischen Gleichgewicht auf dem Niveau der Probe zu befinden, und man in Zeitintervallen den Druck des Gases in dem Speicherkreis mißt,

3) man in den Zeitintervallen den Druck des Gases in dem Meßkreis mißt,

4) man durch geeignete Behandlungseinrichtungen die Desorptionsisotherme der Probe für das Gas auf der Grundlage des Volumens des Speicherkreises (Schritt a), der Menge des von der Probe hin zu dem Speicherkreis übergeleiteten Gases (Schritte 1 und 2), des Druckes in dem Meßkreis (Schritt 3) und des Volumens des Meßkreises in Anwesenheit der Probe (Schritt c, Anspruch 1) bestimmt.

3. Verfahren nach Anspruch 1 oder 2, bei welchem das bei der Temperatur des flüssigen Stickstoffes kondensierbaren Gases aus der Gruppe ausgewählt ist, die durch Stickstoff, Argon, Krypton und Xenon sowie vorzugsweise aus Stickstoff gebildet ist.

4. Verfahren nach einem der Ansprüche 1 bis 3, bei welchem die Probe das Volumen des Gases adsorbiert (Anspruch 1, Schritt f) oder das Volumen des Gases desorbiert (Schritt 2, Anspruch 2), das einer Menge von 0,025 bis 25 Milliliter pro Minute und vorzugsweise von 0,1 bis 0,5 ml/min unter Norm-Temperatur- und Druckbedingungen entspricht.

5. Verfahren nach einem der Ansprüche 1, 3 bis 4, bei welchem während der Adsorptionsphase der Druck in dem Speicherkreis 10 kPa bis 500 kPa, vorzugsweise 50 bis 150 kPa, beträgt und der Druck in dem Meßkreis einschließlich zwischen $1.10^{-3}$ Pa und dem Sättigungsdruck des Gases bei der Temperatur des flüssigen Stickstoffes beträgt.

6. Verfahren nach einem der Ansprüche 2 bis 4, bei welchem die Druckdifferenz zwischen dem Meßkreis und dem Speicherkreis während der Desorptionsphase wenigstens 200 Pa, vorzugsweise wenigstens 1000 Pa, beträgt.

7. Verfahren nach einem der Ansprüche 1 bis 6, bei welchem man eine Druckerniedrigung des kondensierbaren Gases in dem Speicherkreis während der Adsorptionsphase und eine Druckerhöhung des kondensierbaren Gases während der Desorptionsphase in dem Speicherkreis von 50 Pa bis 150 Pa.min$^{-1}$ programmiert.

8. Vorrichtung zum Bestimmen der Messung der Adsorption oder der Messung der Desorption eines durch eine feste Probe adsorbierten Gases, in Kombination umfassend:

- einen Speicherkreis (1),

- einen Meßkreis (2), der eine Probenhalterung (3) und mit der Probenhalterung verbundene Einrichtungen (13) zur Aufrechterhaltung der Temperatur auf derjenigen des flüssigen Stickstoffes umfaßt, wobei sich der Speicherkreis und der Meßkreis in einem thermostatisierten Raum (50) befinden,

- Einrichtungen (7) zur Evakuierung und Einrichtungen (31) zur Messung des Vakuums des Speicherkreises und des Meßkreises,
- Einrichtungen (21, 22) zur Messung und zur Regelung der Temperatur des Speicherkreises und des Meßkreises in dem Raum,
- eine Zufuhr (10) für nicht-kondensierbares Gas bei einer Temperatur des flüssigen Stickstoffes, die mit dem Speicherkreis verbunden ist,
- eine Zufuhr (9) für kondensierbares Gas bei einer Temperatur des flüssigen Stickstoffes, die mit dem Meßkreis verbunden ist, wobei die Vorrichtung dadurch gekennzeichnet ist, daß sie in Kombination umfaßt:
- Einrichtungen zur Bestimmung des Volumens des Gases in dem Speicherkreis, die wenigstens einen Druckaufnehmer ($C_2$) umfassen, welcher geeignet ist, den Druck des Gases in dem Speicherkreis in Abhängigkeit der Zeit zu messen,
- Einrichtungen zur Bestimmung des Volumens des Gases in dem Meßkreis, die wenigstens einen Druckaufnehmer ($C_1$) umfassen, der geeignet ist, den Druck des Gases in dem Meßkreis in Abhängigkeit der Zeit zu messen,
- wenigstens ein Regelventil ($VP_1$), das den Speicherkreis mit dem Meßkreis verbindet,
- Einrichtungen (40) zur Druckprogrammierung, die mit dem Druckaufnehmer ($C_2$) verbunden sind, welche geeignet sind, das Regelventil ($VP_1$) zu regeln, und
- Einrichtungen (14) zur Erfassung und zur Verarbeitung von Informationen, die geeignet sind, die Messung der Adsorption des Gases in die Probe und die Messung der Desorption des Gases aus der Probe zu bestimmen, welche mit den Einrichtungen (40) zur Druckprogrammierung, mit den Einrichtungen zur Bestimmung der Volumen des Gases in dem Speicherkreis, mit den Einrichtungen zur Bestimmung des Volumens in dem Meßkreis, mit den Einrichtungen (13) zur Aufrechterhaltung der Temperatur auf derjenigen des flüssigen Stickstoffs in dem Meßkreis und mit den Einrichtungen (21, 22) zur Messung und zur Regelung der Temperatur des Speicherkreises und des Meßkreises verbunden sind.

9. Vorrichtung nach Anspruch 8, dadurch gekennzeichnet, daß sie Einrichtungen (VR) zur Vorbehandlung unter geregeltem Vakuum und (30) zur Temperaturprogrammierung umfaßt, die mit dem Meßkreis, mit den Einrichtungen zur Evakuierung und zur Messung des Vakuums sowie mit den Einrichtungen zur Erfassung und Verarbeitung von Informationen verbunden sind.

10. Vorrichtung nach Anspruch 8 oder 9, dadurch gekennzeichnet, daß die Einrichtungen (40) zur Druckprogrammierung einen Mikroprozessor umfassen, der ein zu der Abweichung zwischen der Messung des Druckes in den Zeitintervallen und einem in Abhängigkeit der Zeit programmierten Einstellwert des Druckes des Speicherkreises direkt proportionales Signal liefert, wobei das Signal gestattet, das Regelventil zu regeln.

11. Vorrichtung nach einem der Ansprüche 8 bis 10, dadurch gekennzeichnet, daß sie wenigstens einen Tank (6) umfaßt, der mit der Zufuhr für kondensierbares Gas und mit der Zufuhr für nicht-kondensierbares Gas verbunden ist.

12. Vorrichtung nach einem der Ansprüche 8 bis 11, dadurch gekennzeichnet, daß die Einrichtungen zur Aufrechterhaltung der Temperatur zu derjenigen des flüssigen Stickstoffes, die mit dem Meßkreis verbunden sind, eine Zufuhr für flüssigen Stickstoff umfassen, der mit einem Niveauregler von flüssigem Stickstoff in einem Tiefsttemperaturbehälter (13) verbunden ist.

13. Vorrichtung nach einem der Ansprüche 8 bis 12, dadurch gekennzeichnet, daß sie wenigstens ein Isolierungsventil (V4) umfaßt, das zwischen den Einrichtungen zur Evakuierung und dem Meßkreis angeordnet ist.

14. Vorrichtung nach einem der Ansprüche 8 bis 13, dadurch gekennzeichnet, daß das Regelventil ein Ventil mit proportionaler Öffnung ist.

15. Verwendung der Vorrichtung gemäß einem der Ansprüche 8 bis 14 in einem Verfahren zur spezifischen Flächenmessung einer festen, adsorbierenden Probe.

**Claims**

1.  A method of measuring the adsorption of a gas adsorbed by a solid sample and comprising

    a) a stage involved in determining, at a substantially constant and clearly defined temperature, the volume of a reservoir circuit which has to contain the said gas and of a measuring circuit comprising a sample carrying enclosure, carried out in the presence of a gaseous medium which is not condensable at the temperature of the liquid nitrogen,

    b) a stage involving introduction of the sample which has been previously treated or which is in a suitable state of structure in the sample carrying enclosure,

    c) a stage involving determining the volume of the measuring circuit in the presence of the sample at a temperature which is substantially close to that of the liquid nitrogen,

    d) a stage involving the establishment of a vacuum in the reservoir circuit and in the measurement circuit containing the sample, at a pressure of approx. 1 Pa to $10^{-7}$ Pa, the method being characterised in that:

    e) a known quantity of a gas which can be condensed at the temperature of liquid nitrogen is introduced into the reservoir circuit,

    f) a gas pressure drop is programmed in the reservoir circuit from 1 Pa to 7 KPa per minute by using a regulating valve $VP_1$, in order to transfer a substantially constant volume of gas towards the sample, a part of the said gas being adsorbed thereon until the saturation pressure of this gas is attained at the temperature of liquid nitrogen, the said volume of gas making it possible at any time to arrive at what is substantially a thermodynamic equilibrium, the pressure of the gas in the reservoir circuit being measured at intervals of time,

    g) at intervals in time, the pressure of the said gas on the sample in the measuring circuit is measured,

    h) by using suitable processing means, the isotherm of adsorption of the sample for the said gas is determined on a basis of the volume of the reservoir circuit (stage a), on a basis of the quantity of gas transferred from the reservoir circuit to the sample (stage e and f), on a basis of the gas pressure in the measuring circuit (stage g) and on a basis of the volume of the measuring circuit in the presence of the sample (stage c)

2.  A method of measuring desorption of the gas adsorbed by the solid sample, according to claim 1, the said sample being at a temperature which is substantially close to that of liquid nitrogen, characterised in that:

    1) the reservoir circuit is placed under a vacuum at a pressure of approx. 1 Pa to $10^{-7}$ Pa, the temperature remaining at the saturation pressure of the gas adsorbed at the temperature of liquid nitrogen,

    2) an increase in the gas pressure in the reservoir circuit of 1 Pa to 7 KPa per minute is programmed at least once by a regulated valve $VP_2$ or $VP_1$ in order to transfer a substantially constant volume of gas adsorbed on the sample to a reservoir circuit until such time as the pressure in the measuring circuit is greater by at least 200 Pa than the pressure of the reservoir circuit, the said volume of gas making it possible at any moment to be substantially in thermodynamic equilibrium at the level of the sample, the gas pressure in the reservoir circuit being measured at intervals of time,

    3) at intervals of time, the gas pressure in the measuring circuit is measured,

    4) by using suitable processing means, the isotherm of desorption of the sample for the said gas is determined on a basis of the volume of the reservoir circuit (stage a), the quantity of gas transferred from the sample to the reservoir circuit (stages 1 and 2), the pressure in the measuring circuit (stage 3) and the volume of the measuring circuit in the presence of the sample (stage c, claim 1).

3.  A method according to claim 1 or 2, in which the gas which is condensable at the temperature of liquid nitrogen is chosen from the group consisting of nitrogen, argon, krypton and xenon and preferably nitrogen.

4.  A method according to any one of claims 1 to 3, in which the sample adsorbs the volume of gas (claim 1, step f) or desorbs the volume of gas (claim 2 step 2) of flow of 0.025 to 25 millilitres per minute and preferably 0.1 to 0.5 ml.min$^{-1}$ under standard temperature and pressure conditions.

5.  A method according to any one of claims 1, 3 to 4 in which during the adsorption phase, the pressure in the reservoir circuit is 10 KPa to 500 KPa and is preferably 50 to 150 KPa and the pressure in the measuring circuit is comprised between $1.10^{-3}$ Pa and the saturation pressure of the gas at the temperature of the liquid nitrogen.

6.  A method according to any one of claims 2 to 4 in which the difference in pressure between the measuring circuit and the reservoir circuit during the desorption phase is at least 200 Pa and is preferably at least 1000 Pa.

7. A method according to any one of claims 1 to in which a pressure drop in the condensable gas in the reservoir circuit is programmed for the adsorption phase while an increase in pressure of the condensable gas is programmed for the desorption phase in the reservoir circuit, of 50 Pa to 150 Pa. $min^{-1}$

8. An apparatus for determining the measurement of adsorption or measurement of desorption of a gas adsorbed by a solid sample comprising in combination:
   - a reservoir circuit (1),
   - a measuring circuit (2) comprising a sample carrier (3) and means (13) of maintaining the temperature at that of liquid nitrogen connected to the sample carrier, the reservoir circuit and measuring circuit being in a thermostatically controlled enclosure (50),
   - means (7) of establishing a vacuum and means of measuring the vacuum (31) in the reservoir circuit and the measuring circuit,
   - means (21, 22) of measuring and regulating the temperature of the reservoir circuit and of the measuring circuit in the said enclosure,
   - a supply (10) of gas which cannot be condensed at the temperature of liquid nitrogen, connected to the reservoir circuit,
   - a supply (9) of gas which is condensable at the temperature of liquid nitrogen, connected to the measuring circuit, the said apparatus being characterised in that it comprises in combination:
   - means of determining the volume of gas in the reservoir circuit comprising at least one pressure sensor $C_2$ adapted to measure the pressure of the gas in the reservoir circuit as a function of the time,
   - means of determining the volume of gas in the measuring circuit comprising at least one pressure sensor $C_1$ adapted to measure the pressure of the gas in the measuring circuit as a function of the time,
   - at least one regulating valve ($VP_1$) connecting the reservoir circuit to the measuring circuit,
   - means (40) for programming pressure, connected to the pressure sensor $C_2$ adapted to control the regulating valve $VP_1$, and
   - means of acquisition and processing (14) of data adapted to determine the measurement of the adsorption of gas in the sample and measurement of the desorption of the gas from the sample connected to the pressure programming means (40), to the means of determining the volumes of gas in the reservoir circuit, the means of determining the volume of gas in the measuring circuit, the means (13) of maintaining the temperature at that of liquid nitrogen in the measuring circuit and means (21, 22) of measuring and regulating the temperature of the reservoir circuit and of the measuring circuit.

9. An apparatus according to claim 8, characterised in that it comprises means (VR) of pretreatment in a regulated vacuum and for programming temperature (30) connected to the measuring circuit, to the means of establishing a vacuum and of measuring the vacuum and to the means for the acquisition and processing of the data.

10. An apparatus according to claim 8 or 9, characterised in that the pressure programming means (40) comprise a microprocessor delivering a signal which is directly proportional to the divergence between the measurements of the pressure at intervals of time and a reference value of the pressure of the reservoir circuit programmed as a function of the time, the said signal permitting control of the regulating valve.

11. An apparatus according to any one of claims 8 to 10, characterised in that it comprises at least one space (6) connected to the said condensable gas supply and to the said supply of non-condensable gas.

12. An apparatus according to any one of claims 8 to 11, characterised in that the means of maintaining temperature at that of liquid nitrogen connected to the measuring circuit comprise a liquid nitrogen supply connected to a regulator of liquid nitrogen level in a cryogenic container (13).

13. An apparatus according to any one of claims 8 to 12, characterised in that it comprises at least one isolating valve V4 situated between the measuring circuit and the means of establishing the vacuum.

14. An apparatus according to any one of claims 8 to 13, in which the regulating valve is a valve for proportional opening.

15. Use of the apparatus according to any one of claims 8 to 14 in a method of measuring the specific area of an adsorbent solid sample.

**FIG.1**

EP 0 456 559 B1

FIG.2